# EUROPEAN PATENT SPECIFICATION

(11) **EP 1 873 220 B1**
(45) Date of publication and mention of the grant of the patent: **08.03.2017**
(21) Application number: 07110720.5
(22) Date of filing: 21.06.2007
(51) Int. Cl.: C09J 5/04, C09J 201/02, C09J 201/10

(54) **Moisture curing honey-moon adhesive system**
Feuchtigkeitshärtendes "Honey-moon"-Haftsystem
Système adhésif du type "lune de miel" durcissable par l'humidité

(30) Priority: 28.06.2006 EP 06116257
(43) Date of publication of application: 02.01.2008
(73) Proprietor: Kaneka Corporation, Osaka-shi, Osaka 530-8288 (JP)
(72) Inventor: Phanopoulos, Chris, 3040, Huldenberg (BE)
(74) Representative: Caers, Raphael Frans Ivo

(56) References cited:
- EP-A2- 0 839 872

## Description

The present invention relates to a honeymoon adhesive, a system employing the honeymoon adhesive, articles employing the honeymoon adhesive, and the use of the honeymoon adhesive to join surfaces together. The honeymoon adhesive comprises at least three components that include an effective amount of a silylated functionalized polymer, an effective amount of a catalyst for the silylated functionalized polymer, and an effective amount of water. The components of the honeymoon adhesive are separately contained in the system.

A number of adhesives and adhesive compositions are available for joining surfaces together. They include both one-part and two-part systems. An example of one such known composition is disclosed in EP-A-442.380. This composition is a moisture cure contact adhesive comprised of one or more adhesives selected from the group of:
(a) a silicon adhesive and/or an organic polymer adhesive comprising a high polymer A having one or more reactive silicon groups in a molecule;
(b) a urethane adhesive comprising a high polymer B having one or more isocyanate groups in a molecule; and
(c) an epoxy adhesive comprising the high polymer A and/or B mentioned above and a further compound including an epoxy group.

An example of high polymer A is an oxyalkylene polymer including reactive silicon groups which respond to the general formula 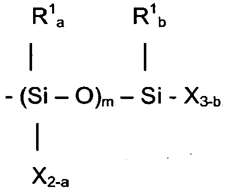 wherein R¹ represents a C₁ to C₂₀ monovalent organic group, or a triorganosilioxy group; X represents a OH group or a homogeneous hydrolyzable group; "a" is an integer which is 0, 1 or 2; "b" is an integer which is 0, 1, 2 or 3; "m" is an integer of 0 or 1 to 18.

This adhesive is applied in a thin layer to the surfaces that need to be adhered and left for some time to react with moisture present in the air, by which it becomes tacky and cured. The adhesive may be either of the one-part or the two-part type and can be applied to both surfaces to be adhered or to one surface only.

When applying this adhesive, care should be taken so that the layer thickness of the applied adhesive is sufficiently thin to permit water absorption and penetration through the thickness in order to achieve curing within a reasonable period of time. For this reason, the thickness of the adhesive layer is preferably kept below 1 mm.

EP-A-824 574 (corresponding to U. S. Patent 6,025,416) discloses a two-part adhesive composition where there is no need to mechanically secure or clamp the surfaces together. This adhesive system comprises a first part A, which is essentially a one component water curable polyether pre-polymer adhesive with terminal group of the following formula. 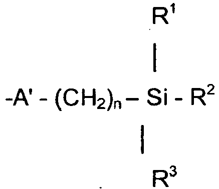 In this formula, A' is a polyether residue, n is number between 1 and 4 and R¹ to R³ are non-hydrolysable C₁ to C₄ alkyl residues or a hydrolysable alkoxy, acetoxy, oximether or amide residue. The adhesive further comprises a second part B which contains the curing accelerator and possibly a catalyst and water.

This adhesive has the disadvantage that the two parts need to be mixed together before application to the surfaces to be adhered. As a result, this system is not a honeymoon adhesive system. Additionally, the two parts need to mixed within a well defined weight mixing ratio A:B of between 5:1 to 15:1.

If the two parts are not mixed before application the opposed surfaces, of if they are mixed and the ratio of part A and B are outside of this well-defined ratio, irregular cure of the system will occur which results in inconsistent performance of the adhesive.

Two part adhesive compositions, such as the adhesive of EP-A-824 574, also typically require the use of special equipment, such as static mixers, double cavity cartridges and mechanical stirrers and so on. This adds to the complexity and cost of using this system. Still further, two-part adhesive systems usually must be applied to the surfaces and the surfaces joined together within a limited period of time after mixing as the adhesive has a limited pot life.

Honeymoon adhesive compositions are also known. One honeymoon adhesive composition is disclosed in US-A-5,626,705. This composition comprises a first part which is a conventional resorcinol-formaldehyde or phenol-resorcinol formaldehyde resin containing a hardener, such as an alkylene group donor. The first part is applied to one side of a joint. The second part of the adhesive system is a similar resin, lacking the hardener but containing a modifier which is a heterocyclic oxygen and nitrogen containing compound. The second part is applied to the other side of a joint. The surfaces of the parts to be joined are then brought together under pressure to form the ultimate bond. Relatively high pressure is needed to achieve reaction between the components. For example, when a pressure of 97 kPa was used, the bond failed. Additionally, this adhesive system contains a significant amount of paraformaldehyde, an organic solvent, which is unfavorable from an environmental point of view.

Other honeymoon adhesives exist, which all show their specific range of benefits and drawbacks.

In general, the key to technical success for honeymoon adhesives is the mutual interpenetration, sometimes also referred to herein as inter-diffusion, of each component into at a rate that is faster than the rate of chemical reaction between or within the components. The mutual interpenetration may be facilitated by incorporation of low molecular weight components, often with high levels of solvent or water. However the use of low molecular weight components involves the risk of formation of a brittle connection or of slowing down the curing.

The present invention provides a two-part honeymoon adhesive that, after application to surfaces, allows the components in each part to inter diffuse into the other part at a rate that is faster than the rate at which the components react with one another. This provides an improved adhesive bond between the surfaces. The two-part adhesive of the invention is substantially solvent free, and requires the use of essentially no pressure, to effect adequate interpenetration of the components at a rate that is faster than the reaction rate of the components. This result is achieved without the need to employ low molecular weight components to facilitate the interpenetration of the components of the two parts of the adhesive. Additionally, the two-part adhesive of the invention is moisture curable.

In one aspect, the present invention comprises a two-part honeymoon adhesive as defined in claim 1.

In another aspect, the present invention, comprises a system in which of the parts of the system is separately contained. That is, each part is kept separate from the other until use so as to prevent premature reaction between the parts.

In still another aspect, the system further comprises instructions for the use of the two-part honeymoon adhesive.

In yet another aspect, the present invention provides an article comprising first and second surfaces to be joined together. The first surface has a coating of the first part of the honeymoon adhesive thereon. The second surface has a coating of the second part of the honeymoon adhesive thereon.

In still another aspect, the present invention provides a method of joining opposing surfaces to one another. The method comprises the steps of applying the first part of the honeymoon adhesive system to a first surface, applying the second part of the honeymoon adhesive system to a second surface, and contacting the two parts with one another to form a bond between them. The method does not require the use of substantial pressure or clamping to hold the surfaces together during reaction of the components.

The honeymoon adhesive of the present invention is of a contact type. This means that, to effectuate the bond, each part of the adhesive is separately applied to one of the surfaces to be bonded. It further means that the attainment of adequate bond strength and fastening of the surfaces to one another is reached soon after the two parts of adhesive have been applied. Curing of the adhesive and joining of the surfaces may be established by simply contacting the opposite surfaces at room temperature. No temporary fastening or clamping, nor any heating is needed.

The adhesive of the present invention is free of organic solvents. Thus it is safe from the point of view of hygiene; it shows reduced risk of burning; and is effective for fire prevention. On the other hand, although the adhesive system contains some water, it is not of the aqueous contact type and is therefore suitable for use with a wide variety of materials.

Within the scope of the present invention the following terms have the following meanings:
- honeymoon adhesive means a two-part adhesive in which the first part of the adhesive is applied to a first surface and the second part of the adhesive is applied to a second surface after which the two coated surfaces are brought into contact to allow mutual interpenetration of the components of the two parts and formation of an adhesive bond, and wherein the components of the adhesive are present in amounts effective to provide the mutual interpenetration of the components upon contact without physical mixing of the first part with the second part so that substantially uniform cure is achieved throughout the adhesive.
- system designates first and second parts of the honeymoon adhesive, wherein the first and second parts are provided in separate containers.
- catalyst means a compound which facilitates the reaction between the first and second parts. The catalyst may be a catalyst as such, but it may also be a compound working as a reaction promoter or a reaction accelerator.
- effective amount means the quantity of the necessary components needed to provide mutual interpenetration of the components upon contact of the first part with the second part and substantially uniform cure of the adhesive to provide a bond between the surfaces to be joined. The first part of the honeymoon adhesive contains a maximum of two of the necessary components, that is, the silylated functionalized polymer, the catalyst and the water, and the second part contains at least the third component, with the proviso that neither the first part nor the second part contains all three components. Or, in other words, neither the first nor the second part contains all three components; at least one of the first and second part contains the silylated functionalized polymer; each of the first and the second parts contain a maximum of two of the silylated functionalized polymer, the catalyst and water, with the proviso that the first and second part together contain all three components. Thus, co-reactants and catalyst are separately contained which favors the pot life of the adhesive system.
- "without the application of substantial pressure" means "with the application of pressure to the extent of not causing entire mechanical mixing or agitation throughout the honeymoon adhesive".

The ability of the components of the present invention to inter-diffuse at a rate that is faster than the rate of the chemical reaction between the components is a result of the use of the three necessary provided as set forth above. This rapid interpenetration between the components results in the quick formation of a strong bond in as little as 10 minutes. Because the components can interpenetrate quickly, the strength of the bond continues to build over time. For example, the strength of the bond has been found to increase by 14 times over the first 24 hours after the adhesive joint has been formed.

When in use, the first part of the honeymoon adhesive is applied to the first surface and the second part of the honeymoon adhesive is applied to the second surface which is to be adhered to the first surface. The first and second surfaces which are at least partly coated with respectively the first and second part are then contacted with at most, gentle pressure. Thus, it has been found that less than 100 kPa of pressure are needed in the present invention to provide adequate bond strength. Preferably, the pressure to be applied is less that 75 kPa, more preferably less than 50 kPa, and even more preferably less than 25 kPa. It has also been found that the weight of the substrates whose surfaces have been coated with the separate parts of the honeymoon adhesive provides enough pressure to insure adequate bond strength.

The two parts of the adhesive composition may be applied to the surfaces to be joined at any desired thickness. Typically they are applied at a thickness in the range of from 20 to 2000 micrometers. However, other thicknesses may be used if desired.

The inventors have found that the components contained in the first and second parts are capable of mutually inter-diffusing to such an extent that curing of the adhesive and joining of the two surfaces may be established without the need to mechanical mixing or agitation of the first and second part before, during or after application. To effectuate interpenetration of the components no heat needs to be applied; curing may be effectuated at room temperature. As no heating is required, the adhesive system of this invention is easy to apply.

As noted above, contact of the two surfaces can be accomplished at room temperature. This is typically a temperature in the range of 18°C-25°C. Higher or lower temperatures may be used if desired. However, lower temperatures may unacceptably slow the formation of a bond between the surfaces to be joined. On the other hand, higher temperatures may increase the reaction rate of the components to a level that negatively impacts the interpenetration of the components.

A wide variety of techniques may be used to apply the first and second parts to the first and second surfaces. For example, they may be applied by hand by troweling. Alternatively, they may be applied from tubes such as by caulking. Additionally, they may be applied by spray coating, roll coating, knife coating, etc. Still other methods of application may also be used as will be understood by one of skill in the art of adhesive application.

In practice, the three necessary components, i.e., the silylated functionalized polymer, catalyst and water, may suitably be combined in the first and second parts, in several ways, provided however that neither the first part nor the second part contains all three of these components.

According to a first preferred embodiment of the invention, the first part contains the silylated functionalized polymer and the catalyst and, optionally, an amount of a dehydrating agent to minimize the risk to water absorption from the environment and partial curing of the first part during storage. The second part contains an amount of water, but may also contain either an amount of the silylated functionalized polymer or an amount of the catalyst. In the latter case it is preferred that the catalyst is resistant to hydrolysis.

According to a second preferred embodiment the first part contains at least the silylated functionalized polymer, but it may also comprise an amount of water or an amount of the catalyst. The second part contains the catalyst and water. In that case the catalyst should be resistant to hydrolysis.

Within these preferred embodiments, specific preferred embodiments include the following:
- the first part comprises the silylated functionalized polymer and water with no catalyst being present, and the second part comprises the catalyst with no silylated functionalized polymer or water being present;
- the first part comprises the silylated functionalized polymer with no water or catalyst being present, and the second part comprises the catalyst and the water with no silylated functionalized polymer being present;
- the first part comprises the silylated functionalized polymer and the catalyst with no water being present, and the second part comprises the water with no silylated functionalized polymer or catalyst being present; and
- the first part comprises the silylated functionalized polymer and water with no catalyst being present, and the second part comprises the silylated polymer and the catalyst with no water being present.

The nature of the polymer backbone of the silylated functionalized polymer used is not critical to this invention, but it should be such that it is suitable for grafting at least one, preferably at least two silane groups onto its backbone by some mechanism. The polymer may be selected from one or a mixture of two or more of the following polymers: polyethers, oxyalkylene polymers (polyethylene oxide, polypropylene oxide, mixture of polyethylene oxide and polypropylene oxide or copolymer (block or random) of ethylene oxide and propylene oxide), polyacrylic acids, polyacrylate, polyisobutyene, polyurethane, polyurea, polyurea/urethane, polyurethane/urea, polyethylene, polypropylene, without however being limited to those examples.

The silylated functionalized polymer may either be di- or tri-alkoxy functional depending on the preferred level of reactivity and storage stability of the polymer. Preferably however use is made of an oxyalkylene polymer containing reactive alkoxysilane groups. Amongst those polymers those having a polyether backbone are preferred. In particular those with a polyether backbone having a molecular weight of at least 2000 are more preferred, as these polymers provide adhesive compositions with low brittleness after curing, notwithstanding the possibility of incorporating lower molecular weight polymers, functionalised or not, as rheological modifiers of the system.

The nature of the functional groups present in the silylated functionalized polymer is not critical to the invention and may vary within wide ranges. Examples of suitable function groups include: dimethoxymethylsilanes, diethoxymethylsilanes, trimethoxysilanes and trimethoxy silanes. They can be summarized in the following structure:

R-[R'-Si(CH₃)ₓ(OCₙHₘ)₃₋ₓ]p

wherein x = 0 or 1
n = 1 or 2
m = 2n+1
p > 1, preferably 1<p<5, most preferably 1<p<3
R is the polymer backbone.
-R'- defines the connecting group between the silane and the polymeric backbone R.

Examples of suitable -R'- bridging groups include, but are not limited to:

-CH₂CH₂CH₂-, -CH₂CH(CH₃)CH₂-, O-CH₂CH(CH₃)-,

-CH₂CH₂CH₂-S-CH₂CH₂CH₂-, -CH₂CH(CH₃)CH₂-S-CH₂CH(CH₃)CH₂-,

-CH₂CH(CH₃)CH₂-S-CH₂CH₂CH₂-,

-CH₂CH₂CH₂-Si(CH₃)₂OSi(CH₃)₂-CH₂CH₂CH₂-,

-CH₂CH(CH₃)CH₂-Si(CH₃)₂OSi(CH₃)₂-CH₂CH₂CH₂-,

-CH₂CH(CH₃)CH₂-Si(CH₃)₂OSi(CH₃)₂-CH₂CH(CH₃)CH₂-,

NHCONH-CH₂-, NHCOO-R"-, -NHCONH=R"-, -OCONH-R"-.

Herein -R"- is an aromatic or an aliphatic or a mixed aromatic/aliphatic hydrocarbon chain including -CH₂- and those having a higher number of carbon atoms, but most preferably R" is an aliphatic chain with 1 - 3 carbon atoms.

The person skilled in the art, taking into account the performance requirements of.the adhesive system, will be able to select the silane functionality. Usually the silane functionality will be of the order of 1 - 5 silane groups per molecule. The silane functional groups are preferably present at end parts of the polymer chains, but can also be pendant functionalities from within the polymer backbone.

Examples of useful silylated functionalized polymers include dimethoxymethylsilane, a trimethoxysilane, a dimethoxyethylsilane or a triethoxysilane terminated polymer.

Preferably the functional groups are terminal functional groups and the weight average molecular weight of the silylated functionalized polymer is at least 2000, more preferably the weight average molecular weight is in the range 3000 to 30000, most preferably 3000 to 25000. Silylated functionalized polymers having a weight average molecular weight below 1000 or above 30000 may also be used if desired. However, optimal results in terms of the interpenetration of the components and the reaction rate between the components are obtained when the weight average molecular weight is in the range of 1000 to 30000.

Within the scope of the present invention it is preferred that the silylated functionalized polymer, especially a silylated polyether, contains an amount of at least one alkoxysilane functionalized acrylic polymer, in a weight ratio of acrylic polymer:silylated polymer ranging from 0 - 100. The presence of this material improves strength, adhesive properties and weatherability of the cured product.

The types of catalysts that can be used in the adhesive system of this invention are wide ranging and include acids, bases and metal complexes such as for example titanium complexes, bismuth complexes and tin complexes. Those catalysts are well known to those skilled in the art. Examples of suitable catalysts include tin based catalysts, for example but not limited to dibutyl tin diacetyl acetonate, 1,1,3,3,-tetrabutyl-1,3-bis[(1-oxododecyl)oxy] distannox, reaction products of diethylhexyl phthalate and dibutyl tin oxide, octyl tin, tin (II) di 2-ethylhexanoate, dibutyl tin dilaurate, di-butyl tin ethanoate. Examples suitable for use in the adhesive system of this invention include Neostann U-220H, U-303, U-28 and U-50 from Nitto Kasei, Tegokat 226, Tegokat 225, Tegokat 216, Tegokat 722 and Tegokat 129 from Goldschmidt, Metatin Catalyst S-26, Metatin Catalyst714, Metatin Catalyst740 from Acima, Tyzor DC, TyzorTPT, TyzorNPT, TyzorNPZ and Tyzor NBZ from Dupont.

The amount of each of the necessary components in the present invention may be selected to be effective in achieving the targeted or desired performance characteristics of the final bond.

### Other ingredients.

Other ingredients, commonly employed in moisture curable adhesives (and sealants) can be incorporated into either or both parts of the system. These other ingredients can include but are not limited to:
- dehydrating agents

If so desired, when one of the parts contains the silylated functionalized polymer and the catalyst, a dehydrating agent may be incorporated into that part, to minimise the risk to curing upon storage. Dehydrating agents suitable for use with the adhesive system of this invention include fast reacting trimethoxysilanes such as vinyltrimethoxysilane and alpha-carbamato-trimethoxysilane and tetraalkoxysilanes for example methylsilicate and ethylsilicate. Other dehydrating agents include molecular sieves. Although they are effective at removing the water, there is a risk to adsorption of active components which would reduce the functionality of the adhesive system. The person skilled in the art will be capable of choosing the appropriate dehydrating agent taking into account the end performance desired, but otherwise all known types which are compatible with alkoxysilanes can be used. Of course the dehydrating agent will not be incorporated into the part of the adhesive system that contains water.

The amount of dehydrating agent used is not critical to the invention and will mostly depend on the blending process used to prepare the different parts, on the moisture contents of the ingredients, the storage conditions of the system and finally the level of storage stability that is desired by the manufacturer. Typically, the dehydrating agent comprises from 0.01 to 10 pbw based on 100 parts by weight of the silylated functionalized polymer. Preferably, the dehydrating agent is a silylated dehydrating agent. A useful dehydrating agent is a trimethoxysilane.

### - adhesion promoters

Examples of useful adhesion promoters include 3-aminopropyltrimethoxysilane, 3-aminopropylmethyldimethoxysilane, 3-aminopropyltriethoxysilane, 2-aminoethyl-3-aminopropyltrimethoxysilane, 2-aminoethyl-3-aminopropyltriethoxysilane, 2-aminoethyl-3-aminopropyltriethoxysilane, triamino-functional propyltrimethoxysilane, 3-glycidyloxypropyltrimethoxysilane, glycidyloxypropyltriethoxysilane. These are preferably incorporated in the part that is substantially water free as they show high reactivity with water. When present, the adhesion promoter preferably comprises from 0.01 to 10 parts by weight per 100 parts by weight of the silylated functionalized polymer.

### - hardening agents

Examples of useful hardening agents include an epoxy resin hardening agent such as, for example, amines such as triethylenetetramine, tetraethylenepentamine, diethylaminopropylamine, N-aminoethylpiperazine, m-xylylenediamine, m-phenylenediamine, diaminodiphenylmethane, diaminodiphenylsulfone, isophoronediamine, and 2,4,6-tris(dimethylaminomethyl)phenol; latent curing agents such as tertiary amine salts, polyamide resins, ketimines, aldimines, and enamines; imidazoles; dicyandiamides; boron trifluoride complex compounds; carboxylic anhdyrides such as phthalic anhydride, hexahydrophthalic anhdyride, tetrahydrophthalic anhdyride, endomethylenetetrahydrophthalic anhdyride, dodecenylsuccinic anhydride, pyromellitic anhydride, and curorenic anhydride; alcohols, phenols; and carboxylic acids. These curing agents of the epoxy resin may be used alone, or two or more kinds of them may be used in combination. When using curing agent of the epoxy resin, it is preferred to have the epoxy resin hardening agent and the silylated polymer contained in separate parts and in that the epoxy hardener is blended into the silylated polymer. The addition of an epoxy resin hardening agent is particularly advantageous in case the first part contains for example an amount of a silyl terminated polyether and an amount of an epoxy resin, and the second part contains an amount of catalyst of silylterminated polyther and water. The epoxy resin is cured with the epoxy hardening agent when contacting the first and the second parts. The silyl terminated polyether is cured with the catalyst and water. The presence of the epoxy resin improves the strength and adhesion of the composition when cured.

### - plasticizers

Examples of useful plasticizers include dioctyl phthalate, dinonyl phthalate, diundenyl phthalate, hydrocarbons, polyethers (preferably methoxy or ethoxy tipped)

### - fillers

Examples of useful fillers include ground calcium carbonate, precipitated calcium carbonate, silica (preferably hydrophobic or precipitated grades), etc.

### - coloring agents

Examples of useful coloring agents include titanium dioxide, pigment pastes, dyes.

### - thixotropic agents

Examples of useful thixotropic agents include polyamide waxes, hydrogenated caster oils, silicas, precipitated calcium carbonates, certain clays, etc.

### - light stabilizers

Examples of useful light stabilizers include UV absorbers (benzotriazoles, triazines), hindered amine light stabilizers ("HALS") such as those available from Ciba Specialty Chemicals, antioxidants (e.g., hindered phenols), phosphites, etc.

When the honeymoon adhesive comprises both the necessary components and the other ingredients, the amount of each component in the adhesive composition will be selected taking into account the targeted or desired performance sets, but will typically be in the following ranges: the adhesive system will usually contain 10 - 80 wt. %, preferably from 15 - 50 wt. %. of the silylated functionalized polymer; 0-5 wt. % of the catalyst; (preferably at least 0.01 wt. % , more preferably at least 0.05 wt %, more preferably at least 0.1 wt. % with a maximum level of catalyst present of preferably less than 4 wt. % and more preferably less than 3 wt. %), 0.1 to 5 wt. % of the water, 02 to 5 wt. % of the dehydrating agent, 0-15 wt. % (preferably at least .01 wt %) of the adhesion promoter, 0-15 wt. % of the hardening agent, 10-70 wt. % of the plasticizer, 10-70 wt.% of the filler, 0-15 wt. % of the coloring agents, 0-15 wt. % of the thixotropic agents, and 0-2 wt. % of the light stabilizers (for each on used).

The various parts may be readily prepared by a variety of techniques. For example, the components of the first and second parts may be combined in separate vessels and mixed together by hand or mechanical mixing. The individual parts may then be separately placed into separate containers and stored for later use. Suitable containers include tubes, cans, pails, cartridge, aluminum package, etc.

The weight ratio of the first part with respect to the second part may vary within wide ranges, but preferably varies within the range of 90:10 to 10:90, preferably 80:20 to 20:80 and more preferably 60:40 to 40:60. The adhesive system of this invention shows good adhesive strength because of the optimum water/solids ratio and good affinity for a wide variety of materials because of the limited water content.
The present invention is further explained in detail in the following examples, wherein "parts" are by weight unless otherwise indicated.

### Examples 1 - 4.

Several two part adhesive systems were prepared, with the composition of Table 1. In these examples, the silylated polymers used were difunctionoal polypropylene oxide polyethers having silyl end groups. In these examples, one surface was aluminium foil and the other surface was teak wood. Example 1 is a comparative example. Examples 2-4 are according to the present invention.

**Table 1: amounts are given in parts by weight**

| Component | Grade | Supplier | Example 1 | | Example 2 | | Example 3 | | Example 4 | |
|---|---|---|---|---|---|---|---|---|---|---|
| | | | 1st Part | 2nd Part | 1st Part | 2nd Part | 1st Part | 2nd Part | 1st Part | 2nd Part |
| Silylated Polymer | S303H | Kaneka | 100 | | 50 | 50 | 25 | 25 | | |
| | SAT 010 | Kaneka | | | | | 25 | 25 | 25 | 25 |
| | SAX 725 | Kaneka | | | | | 25 | 25 | 25 | 25 |
| Plasticizer | DIUP | Exxon | 30 | 20 | 30 | 20 | 40 | 30 | 30 | 20 |
| Calcium carbonate | Winnofil SPM | Solvay | 120 | | 58 | 62 | 50 | 55 | 58 | 62 |
| Titanium dioxide | Bayer RFK-2 | Kerr & Mc Gee | 20 | | 10 | 10 | 10 | 10 | 10 | 10 |
| Thixotropic agent | Crayvallac Super | Crayvally | 5 | | 2.5 | 2.5 | 2.5 | 2.5 | 2.5 | 2.5 |
| Light stabilizer | Tinuvin 770 | Ciba | 1 | | 0.5 | 0.5 | 0.5 | 0.5 | 0.5 | 0.5 |
| UV absorber | Tinuvin 327 | Ciba | 1 | | 0.5 | 0.5 | 0.5 | 0.5 | 0.5 | 0.5 |
| Dehydration agent | Dynasilan VTMO | Degussa-Huls | | | | 2 | | 2 | | 2 |
| Adhesion promotor | Dynasilan DAMO | Degussa-Huls | | 3 | | 3 | | 3 | | 3 |
| Hardening catalyst | U220H | Nittokasei | | 1.5 | | 1.5 | | 1.5 | | 1.5 |
| Distilled water | | | 0.4 | 0 | 0.4 | 0 | 0.5 | 0 | 0.4 | 0 |
| Total | | | 277.4 | 24.5 | 151.9 | 152 | 179 | 180 | 151.9 | 152 |

In example 1, the first part contains the silylated polymer and a small amount of water, and the second part contains the catalyst and the adhesion promoter. The plasticizer is contained in the first and also in the second part, to increase the bulk thereof. There is no need to incorporate a dehydrating agent into either part of this formulation of the adhesive system of this invention.

Example 2 shows an alternative distribution of the ingredients over the first and the second part of the adhesive system of this invention. All components except the catalyst, adhesion promoter and dehydration agent are divided into equal halves and blended. The catalyst, adhesion promoter and the dehydration agent are then added to one of the parts and a small amount of water is added to the other.

Examples 3 and 4 follow the same formulation concept as the example 2 but in these cases, different polymers are used. The purpose of these examples is to show that the approach can work with a range of polymers of different molecular weights, functionalities and viscosities.

To test the rate of strength build up, peel tests were conducted. Test assemblies were prepared by applying the part of the adhesive system with the higher viscosity to tangentially cut teak wood samples pre-cut to 100 x 25 x 5 mm dimensions and which were previously conditioned at 23°C and 50% relative humidity for at least two days prior to the application of the adhesive. The other part was then applied to the freshly cleaned surface of 0.05 mm thick aluminum strips (25 mm wide).

After two minutes, the surfaces covered with respectively the first and second parts were contacted. The two minutes is not considered significant, it was used simply to maintain a constant time after resin application and the marriage of the two surfaces. The strength to pull off the aluminum foil with a 90° peel was then measured on a Zwick tensile tester after 10, 30, 60 minutes and 24 and 168 hours. The results of the development of peel strength as a function of cure time is shown in table 2.

**Table 2. Peel strength aluminum foil from teak wood using various honeymoon systems after increasing cure times (peel strength given in MPa).**

| Time | Example 1 | Example 2 | Example 3 | Example 4 |
|---|---|---|---|---|
| 10 min. | 0.6 | 0.6 | 0.7 | 0.3 |
| 30 min. | 0.8 | 1.5 | 0.8 | 0.5 |
| 60 min. | 1.5 | 3.8 | 0.6 | 1.5 |
| 24 hours | 8.7 | 18 | 32 | 25 |
| 168 hours | 15 | 20 | 42 | 20 |

From table 2 it appears that already after short curing times, appreciable peel strength can be developed. Of the formulations shown, the adhesive system of example 3 and example 4 give rise to the highest rate of strength build up.

These results show that the principle of mutual interpenetration of the ingredients can and does occur, since without such processes, cure throughout the glue line would not occur and a weak boundary would prevail resulting in the lack of observable strength build up.

## Claims

1. A honeymoon adhesive comprising a first part and a second part, wherein the honeymoon adhesive comprises at least three components selected from the group of a silylated functionalized polymer, a catalyst, and water, wherein the first part is provided for application to a first surface and contains a maximum of two of the afore mentioned components and the second part is provided for application to a second surface and contains at least the third component, with the proviso that neither of the first nor the second part contains all three components, wherein the first part contains the silylated functionalized polymer and the water with no catalyst being present and the second part contains the silylated functionalized polymer and the catalyst with no water being present, and wherein three components are provided in amounts effective to provide mutual interpenetration upon contact without physical mixing of the two parts at a rate that is faster than the rate of reaction between the two parts to achieve adhesion of first and second surface and wherein said amounts effective to provide mutual interpenetration upon contact include 0.01 - 5 parts by weight of the catalyst and 0.01 - 5 parts by weight of the water relative to 100 parts by weight of the silylated functionalized polymer.

2. An article comprising first and second surfaces separate from one another, each surface having thereon one of the parts of the adhesive of claim 1.

3. A method of applying the honeymoon adhesive as claimed in claim 1, wherein the first and second parts are applied separately to each of a first surface and a second surface to be adhered to one another, contacting the surfaces to one another without the application of substantial pressure and without mechanical mixing or agitation of the two parts.

4. The method according to claim 3 wherein the second part comprises a dehydrating agent.

5. The method according to any one of claims 3 to 4, wherein the second part further comprises a silylated adhesion promoter.

6. The method according to any one of claims 3 to 5, wherein the silylated functionalized polymer is a polymer which corresponds to the formula
R-[R'-Si(CH₃)ₓ(OCₙHₘ)₃₋ₓ]p
wherein
x = 0 or 1
n = 1 or 2
m = 2n+1
p > 1, preferably 1<p<5, most preferably 1<p<3
R is the polymeric backbone
-R'- is the connecting group between the silane and the polymeric backbone.

7. The method according to any one of claims 3 to 6, wherein the silylated functionalized polymer comprises a polyether backbone that has a molecular weight of at least 2000.

8. The method according to any one of claims 3 to 7, wherein the honeymoon adhesive further comprises at least one of an epoxy based polymer and an epoxy hardening agent and combinations thereof.

9. The method according to any one of claims 3 to 8, wherein the weight ratio of the first part with respect to the second part varies within the range of 90:10 to 10:90.

10. The honeymoon adhesive according to claim 1, wherein the second part contains a dehydrating agent.

11. The honeymoon adhesive according to claim 1, or 10, wherein the second part comprises a silylated adhesion promoter.

12. The honeymoon adhesive according to claim 1, 10, or 11, wherein the silylated functionalized polymer has the formula
R-[R'-Si(CH₃)ₓ(OCₙHₘ)₃₋ₓ]p
wherein
x = 0 or 1
n = 1 or 2
m = 2n+1
p > 1, preferably 1<p<5, most preferably 1 <p<3
R is the polymeric backbone
- R'- is the connecting group between the silane and the polymeric backbone.

13. The honeymoon adhesive according to claim 1, 10, 11, or 12, wherein the silylated functionalized polymer comprises a polyether backbone that has a molecular weight of at least 2000.

14. The honeymoon adhesive according to claim 1, 10, 11, 12, or 13, wherein the adhesive further comprises at least one of an epoxy based polymer, an epoxy hardening agent, and combinations thereof.

15. The honeymoon adhesive according to claim 1, 10, 11, 12, 13, or 14, wherein the weight ratio of the first part with respect to the second part is within the range of 90:10 to 10:90.

16. A method of adhering a first and second surface together that comprises the steps of:
a) providing the honeymoon adhesive of claim 1, 10, 11, 12, 13, 14, or 15;
b) coating the first part of the honeymoon adhesive to at least a portion of one of the first or second surfaces;
c) applying the second part of the honeymoon adhesive to at least a portion of the other of the first or second surfaces;
d) contacting the first and second at least partially coated surfaces to one another without the use of substantial pressure; and
e) allowing the components of the first and second parts of the honeymoon adhesive to mutually interpenetrate upon contact without physical mixing.

17. The method according to claim 16, wherein the silylated functionalized polymer is a polymer which corresponds to the formula
R-[R'-Si(CH₃)ₓ(OCₙHₘ)₃₋ₓ]p
wherein
x = 0 or 1
n = 1 or 2
m = 2n+1
p > 1, preferably 1<p<5, most preferably 1<p<3
R is the polymeric backbone
-R'- is the connecting group between the silane and the polymeric backbone.

18. The method according to claim 16 or 17 wherein the first and second surfaces are contacted to one another with the use of less than 100 kPa of pressure.

## Patentansprüche

1. Ein Honey-moon-Haftmittel, welches einen ersten und einen zweiten Teil umfasst, wobei das Honey-moon-Haftmittel zumindest drei Komponenten umfasst, ausgewählt aus der Gruppe bestehend aus einem silylierten funktionalisierten Polymer, einem Katalysator, und Wasser, wobei der erste Teil zur Auftragung auf einer ersten Oberfläche bereitgestellt ist und ein Maximum von zwei der erwähnten Komponenten enthält, und der zweite Teil zur Auftragung auf einer zweiten Oberfläche bereitgestellt ist und zumindest die dritte Komponente enthält, unter der Bedingung, dass weder der erste Teil noch der zweite Teil alle drei Komponenten enthält, wobei der erste Teil das silylierte funktionalisierte Polymer und das Wasser enthält und kein Katalysator vorhanden ist, und der zweite Teil das silylierte funktionalisierte Polymer und den Katalysator enthält und kein Wasser vorhanden ist, und wobei die drei Komponenten in Mengen bereitgestellt sind, die effektiv sind, um bei Kontakt eine gegenseitige Durchdringung ohne physisches Mischen der zwei Teile mit einer Geschwindigkeit zu ergeben, die höher ist als die Reaktionsgeschwindigkeit zwischen den beiden Teilen, um Adhäsion der ersten und zweiten Oberfläche zu erreichen, und wobei die erwähnten Mengen, die effektiv sind, um eine gegenseitige Durchdringung bei Kontakt zu ergeben, 0,01 bis 5 Gewichtsteile des Katalysators und 0,01 bis 5 Gewichtsteile des Wassers in Bezug auf 100 Gewichtsteile des silylierten funktionalisierten Polymers umfassen.

2. Ein Artikel, welcher erste und zweite Oberflächen getrennt voneinander umfasst, wobei jede Oberfläche darauf einen der Teile des Haftmittels aus Anspruch 1 hat.

3. Ein Verfahren bestehend im Auftragen des Honey-moon-Haftmittels aus Anspruch 1, wobei die ersten und zweiten Teile getrennt auf jeweils eine erste Oberfläche und eine zweite Oberfläche aufgetragen werden, um aneinander zu haften, In-Kontakt-Bringen der Oberflächen miteinander ohne Anwendung von wesentlichem Druck und ohne mechanisches Mischen oder Rühren der beiden Teile.

4. Das Verfahren nach Anspruch 3, wobei der zweite Teil ein entwässerndes Mittel enthält.

5. Das Verfahren nach irgendeinem der Ansprüche 3 bis 4, wobei der zweite Teil ferner einen silylierten Haftvermittler enthält.

6. Das Verfahren nach irgendeinem der Ansprüche 3 bis 5, wobei das silylierte funktionalisierte Polymer ein Polymer ist, das folgender Formel entspricht:
R-[R'-Si(CH₃)ₓ(OCₙHₘ)₃₋ₓ]p
wobei
x = 0 oder 1
n = 1 oder 2
m = 2n+1
p > 1, bevorzugt 1 <p<5, am besten 1 <p<3
R das Polymergerüst ist
-R'- die verbindende Gruppe zwischen dem Silan und dem Polymergerüst ist.

7. Das Verfahren nach irgendeinem der Ansprüche 3 bis 6, wobei das silylierte funktionalisierte Polymer ein Polyethergerüst umfasst, das eine Molekülmasse von zumindest 2.000 hat.

8. Das Verfahren nach irgendeinem der Ansprüche 3 bis 7, wobei das Honey-moon-Haftmittel ferner zumindest eines von einem epoxidbasierten Polymer und einem Epoxidhärter und Kombinationen davon enthält.

9. Das Verfahren nach irgendeinem der Ansprüche 3 bis 8, wobei das Gewichtsverhältnis des ersten Teils in Bezug zum zweiten Teil im Bereich von 90:10 bis 10:90 variiert.

10. Das Honey-moon-Haftmittel nach Anspruch 1, wobei der zweite Teil ein entwässerndes Mittel enthält.

11. Das Honey-moon-Haftmittel nach Anspruch 1 oder 10, wobei der zweite Teil einen silylierten Haftvermittler enthält.

12. Das Honey-moon-Haftmittel nach Anspruch 1, 10 oder 11, wobei das silylierte funktionalisierte Polymer folgende Formel hat:
R-[R'-Si(CH₃)ₓ(OCₙHₘ)₃₋ₓ]p
wobei
x = 0 oder 1
n = 1 oder 2
m = 2n+1
p > 1, bevorzugt 1 <p<5, am besten 1 <p<3
R das Polymergerüst ist
-R'- die verbindende Gruppe zwischen dem Silan und dem Polymergerüst ist.

13. Das Honey-moon-Haftmittel nach Anspruch 1, 10, 11 oder 12, wobei das silylierte funktionalisierte Polymer ein Polyethergerüst umfasst, das eine Molekülmasse von zumindest 2.000 hat.

14. Das Honey-moon-Haftmittel nach Anspruch 1, 10, 11, 12 oder 13, wobei das Haftmittel ferner zumindest eines von einem epoxidbasierten Polymer, einem Epoxidhärter, und Kombinationen davon enthält.

15. Das Honey-moon-Haftmittel nach Anspruch 1, 10, 11, 12, 13 oder 14, wobei das Gewichtsverhältnis des ersten Teils in Bezug zum zweiten Teil im Bereich von 90:10 bis 10:90 liegt.

16. Ein Verfahren bestehend im aneinander Haften einer ersten und zweiten Oberfläche, welches folgende Schritte umfasst:
a) Bereitstellung des Honey-moon-Haftmittels nach Anspruch 1, 10, 11, 12, 13, 14 oder 15;
b) Beschichtung zumindest eines Abschnitts einer der ersten oder zweiten Oberflächen mit dem ersten Teil des Honey-moon-Haftmittels;
c) Beschichtung zumindest eines Abschnitts der anderen der ersten oder zweiten Oberflächen mit dem zweiten Teil des Honey-moon-Haftmittels;
d) In-Kontakt-Bringen der ersten und zweiten zumindest teilweise beschichteten Oberflächen miteinander ohne Anwendung von wesentlichem Druck; und
e) Gegenseitig-Durchdringen-Lassen der Komponenten des ersten und zweiten Teils des Honey-moon-Haftmittels bei Kontakt ohne physisches Mischen.

17. Das Verfahren nach Anspruch 16, wobei das silylierte funktionalisierte Polymer ein Polymer ist, das folgender Formel entspricht:
R-[R'-Si(CH₃)ₓ(OCₙHₘ)₃₋ₓ]p
wobei
x = 0 oder 1
n = 1 oder 2
m = 2n+1
p > 1, bevorzugt 1 <p<5, am besten 1 <p<3
R das Polymergerüst ist
-R'- die verbindende Gruppe zwischen dem Silan und dem Polymergerüst ist.

18. Das Verfahren nach Anspruch 16 oder 17, wobei die erste und zweite Oberfläche unter Anwendung von weniger als 100 kPa Druck miteinander in Kontakt gebracht werden.

## Revendications

1. Adhésif de type «lune de miel» comprenant une première partie et une seconde partie, où l'adhésif de type «lune de miel » comprend au moins trois composants choisis parmi le groupe d'un polymère fonctionnalisé silylé, d'un catalyseur et de l'eau, dans lequel la première partie est fournie pour application sur une première surface et contient un maximum de deux des composants susmentionnés et la seconde partie est fournie pour application sur une seconde surface et contient au moins le troisième composant, à condition que ni la première ni la seconde partie ne contienne l'ensemble des trois composants, dans lequel la première partie contient le polymère fonctionnalisé silylé et l'eau sans catalyseur étant présent et la seconde partie contient le polymère fonctionnalisé silylé et le catalyseur sans aucune eau n'étant présente, et dans lequel trois composants sont fournis en des quantités efficaces pour fournir une interpénétration réciproque lors d'un contact sans mélange physique des deux parties à une vitesse qui est plus rapide que la vitesse de réaction entre les deux parties pour obtenir une adhésion des première et seconde surfaces et dans lequel lesdites quantités efficaces pour fournir une interpénétration réciproque lors d'un contact comprennent 0,01 à 5 parties en poids du catalyseur et 0,01 à 5 parties en poids de l'eau par rapport à 100 parties en poids du polymère fonctionnalisé silylé.

2. Article comprenant des première et seconde surfaces indépendantes l'une de l'autre, chaque surface comportant sur celle-ci une des parties de l'adhésif selon la revendication 1.

3. Procédé d'application de l'adhésif de type « lune de miel » selon la revendication 1, dans lequel les première et seconde parties sont appliquées séparément sur chacune parmi une première surface et une seconde surface, destinées à être fixées par adhérence l'une sur l'autre, en mettant en contact les surfaces l'une avec l'autre sans l'application de pression importante et sans mélange ou agitation mécanique des deux parties.

4. Procédé selon la revendication 3, dans lequel la seconde partie comprend un agent déshydratant.

5. Procédé selon l'une quelconque des revendications 3 à 4, dans lequel la seconde partie comprend en outre un promoteur d'adhésion silylé.

6. Procédé selon l'une quelconque des revendications 3 à 5, dans lequel le polymère fonctionnalisé silylé est un polymère qui correspond à la formule
R-[R'-Si(CH₃)ₓ(OCₙHₘ)₃₋ₓ]p
dans laquelle
x = 0 ou 1
n = 1 ou 2
m = 2n+1
p > 1, de préférence 1 <p<5, idéalement 1 <p<3
R est le squelette polymère
-R'- est le groupe de raccordement entre le silane et le squelette polymère.

7. Procédé selon l'une quelconque des revendications 3 à 6, dans lequel le polymère fonctionnalisé silylé comprend un squelette polyéther qui a une masse moléculaire d'au moins 2000.

8. Procédé selon l'une quelconque des revendications 3 à 7, dans lequel l'adhésif de type « lune de miel » comprend en outre au moins l'un parmi un polymère à base d'époxy et un agent de durcissement époxy et leurs combinaisons.

9. Procédé selon l'une quelconque des revendications 3 à 8, dans lequel le rapport pondéral de la première partie par rapport à la seconde partie varie dans la plage de 90:10 à 10:90.

10. Adhésif de type «lune de miel» selon la revendication 1, dans lequel la seconde partie contient un agent déshydratant.

11. Adhésif de type « lune de miel » selon la revendication 1 ou 10, dans lequel la seconde partie comprend un promoteur d'adhésion silylé.

12. Adhésif de type «lune de miel» selon la revendication 1, 10 ou 11, dans lequel le polymère fonctionnalisé silylé est de formule
R-[R'-Si(CH₃)ₓ(OCₙHₘ)₃₋ₓ]p
dans laquelle
x = 0 ou 1
n = 1 ou 2
m = 2n+1
p > 1, de préférence 1 <p<5, idéalement 1 <p<3
R est le squelette polymère
-R'- est le groupe de raccordement entre le silane et le squelette polymère.

13. Adhésif de type «lune de miel» selon la revendication 1, 10, 11 ou 12, dans lequel le polymère fonctionnalisé silylé comprend un squelette polyéther qui a une masse moléculaire d'au moins 2000.

14. Adhésif de type «lune de miel» selon la revendication 1, 10, 11, 12 ou 13, dans lequel l'adhésif comprend en outre au moins l'un parmi polymère à base d'époxy, un agent de durcissement époxy, et leurs combinaisons.

15. Adhésif de type «lune de miel» selon la revendication 1, 10, 11, 12, 13 ou 14, dans lequel le rapport pondéral de la première partie par rapport à la seconde partie se situe dans la plage de 90:10 à 10:90.

16. Procédé d'adhésion d'une première et d'une seconde surface l'une à l'autre, qui comprend les étapes consistant à :
a) fournir l'adhésif de type « lune de miel » selon la revendication 1, 10, 11, 12, 13, 14 ou 15 ;
b) revêtir la première partie de l'adhésif de type « lune de miel » sur au moins une partie d'une parmi les première ou seconde surfaces ;
c) appliquer la seconde partie de l'adhésif de type « lune de miel » à au moins une partie de l'autre parmi les première ou seconde surfaces ;
d) mettre en contact les première et seconde surfaces au moins partiellement revêtues l'une avec l'autre sans l'utilisation de pression importante ; et
e) laisser les composants des première et seconde parties de l'adhésif de type « lune de miel » s'interpénétrer réciproquement lors d'un contact sans mélange physique.

17. Procédé selon la revendication 16, dans lequel le polymère fonctionnalisé silylé est un polymère qui correspond à la formule
R-[R'-Si(CH₃)ₓ(OCₙHₘ)₃₋ₓ]p
dans laquelle
x = 0 ou 1
n = 1 ou 2
m = 2n+1
p > 1, de préférence 1<p<5, idéalement 1 <p<3
R est le squelette polymère
-R'- est le groupe de raccordement entre le silane et le squelette polymère.

18. Procédé selon la revendication 16 ou 17, dans lequel les première et seconde surfaces sont mises en contact l'une avec l'autre avec l'utilisation de moins de 100 kPa de pression.
